# EUROPÄISCHE PATENTSCHRIFT

(11) **EP 4 067 049 B1**
(45) Veröffentlichungstag und Bekanntmachung des Hinweises auf die Patenterteilung: **24.04.2024**
(21) Anmeldenummer: 22175256.1
(22) Anmeldetag: 09.05.2019
(51) Int. Cl.: B29C 49/42, B29C 49/78, B29C 49/06, B29C 49/36, B29L 31/00

(54) **VORRICHTUNG ZUM UMFORMEN VON KUNSTSTOFFVORFORMLINGEN ZU KUNSTSTOFFBEHÄLTNISSEN MIT ENTKOPPELTEN ANTRIEBEN**
DEVICE FOR REFORMING PLASTIC PREFORMS INTO PLASTIC CONTAINERS WITH DECOUPLED DRIVES
DISPOSITIF DE FORMAGE DE PRÉFORMES EN MATIÈRE PLASTIQUE EN DES RÉCIPIENTS EN MATIÈRE PLASTIQUE POURVU D'ENTRAÎNEMENTS DÉCOUPLÉS

(30) Priorität: 09.05.2018 DE 102018111235
(43) Veröffentlichungstag der Anmeldung: 05.10.2022
(62) Teilanmeldung aus: 19723390.1
(73) Patentinhaber: Krones AG, 93073 Neutraubling (DE)
(72) Erfinder: Haller, Markus, 93073 Neutraubling (DE); Christiansen, Peter, 93073 Neutraubling (DE)
(74) Vertreter: Hannke Bittner & Partner mbB Regensburg

(56) Entgegenhaltungen:
- US-A1- 2013 061 557
- US-A1- 2016 339 622
- US-A1- 2017 028 610
- US-B1- 6 264 457
- US-B1- 6 386 857

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit Langem bekannt. Üblicherweise werden dabei Kunststoffvorformlinge zunächst in einer Erwärmungseinrichtung wie insbesondere aber nicht ausschließlich einem Infrarotofen erwärmt und anschließend in einer Umformungseinrichtung wie insbesondere einer Blasformeinrichtung zu den Kunststoffbehältnissen umgeformt.

Zu diesem Zweck werden Kunststoffvorformlinge üblicherweise zunächst ausgehend von einer losen Schüttung in einer Reihe transportiert und anschließend werden die Kunststoffvorformlinge vereinzelt der Erwärmungseinrichtung bzw. dem Ofen zugeführt. Um den Zufluss der Kunststoffvorformlinge in einer Zuführung zu der Erwärmungseinrichtung zu steuern, wird im Stand der Technik ein pneumatisch verfahrbarer Sperrbolzen (eine sogenannte Preformsperre) eingesetzt.

Um bei einer unsynchronen Übergabe der Kunststoffvorformlinge zwischen einer Zuführschiene und einem Einlaufsägezahnstern eine Verkeilung der Kunststoffvorformlinge zu verhindern, ist an dieser Stelle ein Teil der Zuführschiene beweglich senkrecht zur Materialflussrichtung verbaut.

Dieser bewegliche Teil wird durch einen Pneumatikzylinder in einer Produktionsposition bewegt. Bei einer auftretenden Verkeilung wird der bewegliche Teil entgegen der Kraft eines Pneumatikzylinders aus einer Produktionsposition bewegt. Diese Positionsänderung wird insbesondere durch Sensoren erkannt und daraufhin der bewegliche Teil durch eine Maschinensteuerung in eine andere Endlage gefahren, um die Verkeilung zu lösen.

Da hohe Anforderungen an die Verfahrdynamik der Preformsperre und den beweglichen Teil der Zuführschiene gestellt werden, sind dafür diverse Komponenten wie Pneumatikzylinderventile und digitale Ausgangsmodule erforderlich, welche auch entsprechende Eigenschaften aufweisen. Dies ist insgesamt mit entsprechend hohen Kosten verbunden. Außerdem ist die Parametrierung der Preformsperre für eine zuverlässige synchrone Übergabe der Kunststoffvorformlinge an einen Sägezahneinlaufstern nur eingeschränkt möglich. Die Parameter sind zudem abhängig von der Produktionsgeschwindigkeit und den Kunststoffvorformlingen.

Der vorliegenden Erfindung liegt daher die Aufgabe zugrunde, derartige Vorrichtungen insbesondere flexibler bei Ausfällen zu gestalten. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Die US 2016339622 A1 zeigt eine Vorrichtung zum Erwärmen von Kunststoffvorformlingen mit einer ersten Transportvorrichtung, die die Kunststoffvorformlinge vereinzelt transportiert, wobei die erste Transportvorrichtung eine Vielzahl von Ausnehmungen zur Aufnahme der Kunststoffvorformlinge aufweist, und einer zweiten Transportvorrichtung, die die von der ersten Transportvorrichtung transportierten Kunststoffvorformlinge übernimmt und entlang eines vorgegebenen Transportweges transportiert. Die zweite Transporteinrichtung weist eine Vielzahl von Halteelementen zum Halten der Kunststoffvorformlinge auf. Die Vorrichtung umfasst ferner mindestens eine Heizeinrichtung, die die von der zweiten Transporteinrichtung transportierten Kunststoffvorformlinge erwärmt, wobei zumindest die erste Transporteinrichtung eine Umlauftransporteinrichtung ist, bei der eine relative Position der Ausnehmungen der ersten Transporteinrichtung in Umlaufrichtung der ersten Transporteinrichtung relativ zu einer Position der Halteelemente in Bezug auf den Transportweg veränderbar ist.

Die US 6386857 B1 zeigt eine Rotationsmaschine zum Herstellen von PET-Behältern oder - Flaschen ausgehend von einem geformten Vorformling, welche einen Drehtisch umfasst, der von einer Motor-Getriebe-Einheit angetrieben wird und eine Vielzahl von Formen trägt, Antriebs- und Greifräder zum Greifen der Vorformlinge aus einem Ofen, eine Antriebskette zum Antreiben der Vorformlinge durch den Ofen und Sternelemente mit variabler Teilung zum Zuführen der Vorformlinge zu den Formen und zum Entnehmen der geformten Flaschen aus den Formen, wobei darüber hinaus eine zentrale Steuereinheit zur unabhängigen Steuerung der oben genannten Vorrichtungen vorgesehen ist.

Die US 6264457 B1 beschreibt ein System zum Überführen von Vorformlingen zu einem Ofenstern einer Blasformherstellungsanlage, welche einen Transportmechanismus umfasst, der so konstruiert und angeordnet ist, dass er in der Lage ist, mindestens ein Kunststoffvorformlingselement zu halten, einen ersten Sensor zum Erfassen einer Transportgeschwindigkeit des Ofensterns und eine Steuerung zum Steuern der Bewegung des Transportmechanismus. Die Steuerung empfängt eine Eingabe von dem ersten Sensor, so dass sie den Transportmechanismus anweisen kann, einen Vorformling mit einer Geschwindigkeit zu dem Ofenstern zu transportieren, die der Geschwindigkeit des Ofensterns genau entspricht. Die Steuerung ist auch so programmiert, dass sie den Transportmechanismus anweist, Vorformlinge aus einem Vorformlingsvorrat mit einer Geschwindigkeit aufzunehmen, die unter der Geschwindigkeit des Ofensterns liegt. Dadurch wird die Gefahr von Verklemmungen an der Schnittstelle zwischen dem Vorformlingvorrat und dem Transportmechanismus verringert.

Die US 2017028610 A1 betrifft eine Vorrichtung und ein Verfahren zum Transportieren und Handhaben von Behältern, insbesondere von Behältern aus einem thermoplastischen Material. Die Transportvorrichtung weist mindestens eine in Transportrichtung bewegliche Handhabungseinrichtung zum insbesondere gleichzeitigen Handhaben eines oder mehrerer der Behälter auf, wobei die Handhabungseinrichtung relativ zur Transportvorrichtung beweglich angeordnet ist, um sich in einer von der Transportrichtung abweichenden Richtung zu bewegen. Die Erfindung ist dadurch gekennzeichnet, dass die Transporteinrichtung mindestens einen Motor aufweist, mittels dessen die mindestens eine Handhabungseinrichtung motorisch in die von der Transportrichtung abweichende Richtung bewegbar ist.

Die US 2013061557 A1 beschreibt ein aseptisches Abfüllsystem, das in einer aseptischen Umgebung angeordnet ist und mit dem die Vorformung, die Flaschenbildung und die Abfüllung von Flaschen mit einem Getränk in einem aseptischen Zustand durchgeführt werden. Das aseptische Füllsystem umfasst eine Vorformungsmaschine, eine Blasmaschine zum Formen von Flaschen durch Aufblasen der von der Vorformungsmaschine geformten Vorformen und eine Füllmaschine, die mit der Blasmaschine durch eine spezifische Kupplungsstruktur integriert ist und die von der Blasmaschine geformten Flaschen mit dem Getränk füllt.

Eine erfindungsgemäße Vorrichtung zum Umformen von Kunststoffvorformlingen zu Kunststoffbehältnissen weist eine Transporteinrichtung auf, welche die Kunststoffvorformlinge entlang eines vorgegebenen Transportpfads transportiert, wobei diese Transportvorrichtung eine Vielzahl von sich bevorzugt aneinander anschließenden Transporteinrichtungen zum Transportieren der Kunststoffvorformlinge aufweist.

Weiterhin weist die Vorrichtung eine Umformungseinrichtung auf, welche entlang des Transportpfads der Kunststoffvorformlinge nach der Erwärmungseinrichtung angeordnet ist, wobei die Vorrichtung eine erste Transporteinrichtung aufweist, welche der Erwärmungseinrichtung die Kunststoffvorformlinge vereinzelt zuführt und wobei die Erwärmungseinrichtung eine zweite Transporteinrichtung aufweist, welche die Kunststoffvorformlinge während deren Erwärmung transportiert.

Erfindungsgemäß weist die erste Transporteinrichtung eine erste Antriebseinrichtung auf und die zweite Transporteinrichtung weist eine zweite Antriebseinrichtung auf und die erste und die zweite Antriebseinrichtung sind unabhängig voneinander steuerbar.

Es wird daher im Rahmen der Erfindung vorgeschlagen, dass die Antriebseinrichtungen der Zuführeinrichtung, wie beispielsweise eines Sägezahnsterns, sowie die Antriebseinrichtung des eigentlichen Ofens unabhängig voneinander steuerbar sind. So ist es beispielsweise möglich, dass ein Einlaufsägezahnstern mit einem eigenen Servoantrieb bzw. einer eigenen Antriebseinrichtung bewegt wird.

Im internen Stand der Technik der Anmelderin ist es bekannt, dass eine Verfahrbewegung so ausgeführt wird, dass stets eine zur Heizkette synchrone Positionierung stattfindet. Dies bedeutet, dass die Zuführeinrichtungen und die Erwärmungseinrichtung stets aufeinander synchronisiert sind.

Die Erfindung schlägt demgegenüber vor, dass unabhängige Antriebe vorgesehen sind und diese auch bevorzugt zeitweise voneinander entkoppelt sind. So ist es im Rahmen der Erfindung möglich, den Antrieb, insbesondere den Antrieb der Zuführeinrichtung, d.h. etwa des Sägezahnsterns nur dann zu bewegen, wenn eine Übergabe der Kunststoffvorformlinge erfolgen muss. Auf diese Weise kann die oben beschriebene Preformsperre entfallen. Da der Strom der Kunststoffvorformlinge nicht mehr unterbrochen wird, kann auch das bewegliche Teil der Zuführschiene starr ausgeführt werden.

Auch die bislang notwendigen Komponenten zu deren Ansteuerung können entfallen.

Auf diese Weise können die Materialkosten reduziert werden. Daneben ist auch ein zuverlässigerer Betrieb möglich (der Maschinenwirkungsgrad wird erhöht). Auch ist keine Parametrierung mehr notwendig, sodass auch eine Reduktion der Personalkosten ermöglicht ist. Bei einer weiteren vorteilhaften Ausführungsform weist die zweite Transporteinrichtung ein umlaufendes Transportmittel auf. Hierbei kann es sich beispielsweise um einen drehbaren Träger handeln, besonders bevorzugt handelt es sich jedoch bei dem umlaufenden Transportmittel um eine Transportkette. An dieser Transportkette kann eine Vielzahl von Halteelementen angeordnet sein, welche dazu geeignet und bestimmt sind, die Kunststoffvorformlinge zu transportieren. Besonders bevorzugt kann es sich hierbei um Haltedorne handeln, welche in die Mündungen der Kunststoffvorformlinge eingreifen.

Bevorzugt weist die Erwärmungseinrichtung auch Dreheinrichtungen auf, welche dazu dienen, die Kunststoffvorformlinge während ihrer Erwärmung um ihre Längsrichtung zu drehen. Daneben können auch Vorrichtungen vorgesehen sein, welche eine Bewegung der Halteelemente senkrecht zur Transportrichtung und insbesondere in einer Längsrichtung der Kunststoffvorformlinge ermöglichen.

Besonders bevorzugt weist der Transportpfad der zweiten Transporteinrichtung unterschiedlich gekrümmte Abschnitte auf. So kann der Transportpfad gerade Abschnitte aufweisen und zwischen diesen geraden Abschnitten beispielsweise gekrümmte Abschnitte, in denen eine Bewegungsrichtung der Kunststoffvorformlinge um einen vorgegebenen Winkel, etwa um 180° umgelenkt wird.

Bei einer weiteren vorteilhaften Ausführungsform weisen die Antriebseinrichtungen Motoren, insbesondere Elektromotoren und insbesondere Servomotoren auf.

Bei einer weiteren vorteilhaften Ausführungsform handelt es sich bei der Umformungseinrichtung um eine Blasformmaschine, welche die Kunststoffvorformlinge durch Beaufschlagung mit einem gasförmigen Medium zu den Kunststoffbehältnissen umformt. Es kann jedoch auch eine Umformungseinrichtung vorgesehen sein, welche die Kunststoffvorformlinge mit einem flüssigen Produkt und insbesondere mit einem abzufüllenden Medium expandiert bzw. umformt.

Bei einer weiteren vorteilhaften Ausführungsform handelt es sich bei der vierten Transporteinrichtung, welche der Umformungseinrichtung zugeordnet ist, um ein sogenanntes Blasrad. Vorteilhaft ist wenigstens eine Umformungsstation und besonders bevorzugt ist eine Vielzahl von Umformungsstationen an diesem Blasrad angeordnet. Dabei weisen besonders bevorzugt diese Umformungsstationen jeweils Blasformeinrichtungen auf, wobei diese Blasformeinrichtungen besonders bevorzugt Seitenteile aufweisen, die bezüglich einander schwenkbar sind, um Kunststoffvorformlinge aufzunehmen und in ihrem Inneren zu den Kunststoffbehältnissen und insbesondere Kunststoffflaschen zu expandieren. Daneben weisen die Blasformeinrichtungen bevorzugt auch Bodenteile auf, welche den Hohlraum zur Aufnahme der Kunststoffvorformlinge begrenzen.

Bei einer weiteren vorteilhaften Ausführungsform weisen die Umformungsstationen auch jeweils stangenartige Körper, insbesondere sogenannte Reckstangen auf, die in das Innere der Kunststoffvorformlinge einführbar sind, um diese in deren Längsrichtung zu dehnen.

Bei einer weiteren vorteilhaften Ausführungsform weist die Vorrichtung eine Steuerungseinrichtung auf, welche dazu geeignet und bestimmt ist, die einzelnen Transporteinrichtungen zu steuern.

Bei einer weiteren vorteilhaften Ausführungsform weist die Vorrichtung wenigstens eine Sensoreinrichtung auf, welche dazu geeignet und bestimmt ist, Fehler im Transport der Kunststoffvorformlinge zu erfassen. So kann beispielsweise ein Verkeilen von Kunststoffvorformlingen oder Ähnliches erfasst werden. Bevorzugt kann in Reaktion auf einen derartigen Fehler der ersten Transporteinrichtung deren Antrieb verlangsamt oder auch abgeschalten werden.

Bei einer weiteren vorteilhaften Ausführungsform ist die erste Transporteinrichtung als Vereinzelungseinrichtung ausgebildet, welche aufeinander folgende Kunststoffvorformlinge vereinzelt. Besonders bevorzugt weist diese Vereinzelungseinrichtung einen Sägezahnstern auf, wobei dieser besonders bevorzugt eine Vielzahl von Ausnehmungen am Außenumfang aufweist, von welchen die Kunststoffvorformlinge und insbesondere deren Hälse aufgenommen werden können.

Bevorzugt dient daher dieser Sägezahnstern dazu, aus einem ankommenden Strom von Kunststoffvorformlingen jeweils einzelne abzugreifen und diese so zu vereinzeln.

In einigen Fällen ist es auch erforderlich bzw. vorteilhaft, dass mit einer Umformungseinrichtung besonders niedrige Produktionsleistungen gefahren werden. Dies ist beispielsweise denkbar, wenn eine Umformungseinrichtung wenige Blasformen aufweist oder auch eine geringe Leistungsbandbreite einer nachfolgenden Abfüllmaschine vorliegt. Daneben kann es auch gewünscht sein, einen sogenannten Labormaschinenbetrieb einzurichten (z.B. auch bei einer Pilotformenabmusterung). In diesem Falle sind im Stand der Technik hierfür spezielle Einlaufgarnituren für Kunststoffvorformlinge vorgesehen, z.B. Garnituren, welche zur Produktion auf jeder zweiten Blasstation dienen.

Daneben ist es auch bekannt, dass eine Preform-Einlaufsperrfinger getaktet arbeitet. Daneben besteht eine aus dem internen Stand der Technik bekannte Möglichkeit der Anmelderin darin, die Kunststoffvorformlinge vor einem Blasprozess einfach unproduziert auszuleiten.

Diese Vorgehensweisen aus dem Stand der Technik sind mit Nachteilen im Heizofen bzw. der Erwärmungseinrichtung der Blasmaschine behaftet. Wird nur jeder zweite Kunststoffvorformling in die Maschine geführt, entstehen große Lücken. Durch diese großen Lücken (größere Zwischenräume der Kunststoffvorformlinge im Ofen) entsteht ein wesentlich höherer Stromverbrauch und dies kann auch zu größeren thermischen Belastungen oberhalb der Heizkammer führen (z.B. bei den nicht belegten Heizdornen).

Dadurch dass, wie oben erwähnt, besonders bevorzugt mehrere bzw. alle Transporteinrichtungen bzw. deren Antriebe unabhängig voneinander steuerbar sind und besonders bevorzugt eine Servoantriebstechnologie in der Umformungseinrichtung vorgesehen ist, kann erreicht werden, dass (insbesondere bei geraden Teilungen) mit Hilfe eines ausgewählten Bedienbildschirmprogramms (welches besonders bevorzugt in einem Bedienbildschirm einer Blasmaschine anwählbar ist) die Leistung aller dem Blasrad vorgeschalteten Funktionsräder so angepasst wird, dass man lückenlos Preforms der Maschine und insbesondere der Umformungseinrichtung zuführt. Bevorzugt können sämtliche Einstellungen der Funktionsräder zueinander in dem Bedienbildschirmprogramm als Maschinenrezepte bzw. Produktionsrezepte abgespeichert werden.

Auf diese Weise wird hier die Leistung insoweit reduziert, als nur noch z.B. jede zweite Umformungsstation oder nur eine einzige Umformungsstation mit Kunststoffvorformlingen beschickt wird.

Dies bietet wiederum den Vorteil, dass auf Knopfdruck eine sehr hohe Flexibilität hergestellt werden kann. Selbst wenn etwa ein Benutzer nur eine Kleinserie produzieren möchte (weil er beispielsweise nur eine Blasform besitzt) kann er dies ohne einen erhöhten Energieverbrauch über längere Zeit tun. Es kommt nicht zu einer thermischen Überbelastung der Bereiche über dem Heizkanal und man benötigt keine speziellen Garniturenteile.

Bei einem ständigen getaktet arbeitenden Einlauffinger für Kunststoffvorformlinge bestand außerdem eine erhöhte Störanfälligkeit bzw. eine deutlich reduzierte Lebensdauer.

Im Extremfall könnte auch nur eine Einzelmaschine bzw. Labormaschine Einsatz finden. Daneben wäre es auch möglich, diese Erfindung an den bekannten Rundläufermaschinen als Produktionsmaschinen anzuwenden.

Auf diese Weise kann insbesondere der Vorteil einer Servoantriebstechnologie besser genutzt werden.

Bei einer weiteren vorteilhaften Ausführungsform ist die erste Transporteinrichtung gegenüber der zweiten Transporteinrichtung mit einer veränderten und insbesondere verlangsamten Transportgeschwindigkeit antreibbar. Auch wäre es, wie oben erwähnt, möglich, die erste Transporteinrichtung zeitweise anzuhalten, während die zweite Transporteinrichtung, welche die Kunststoffvorformlinge durch den Ofen transportiert, weiterläuft.

Bei einer weiteren vorteilhaften Ausführungsform ist daher die erste Transporteinrichtung bei einem fortgesetzten Betrieb der zweiten Transporteinrichtung anhaltbar. Auf diese Weise gelangen keine Kunststoffvorformlinge mehr zur zweiten Transporteinrichtung und insbesondere zu dem Ofen. Besonders bevorzugt ist die erste Transporteinrichtung maximal mit einer Geschwindigkeit betreibbar, mit der sie auf die zweite Transporteinrichtung synchronisiert ist.

Besonders bevorzugt wirkt die erste Transporteinrichtung als Transportsperre, besonders bevorzugt ist keine weitere Preformsperre wie oben beschrieben erforderlich.

Bei einer weiteren vorteilhaften Ausführungsform weist die Vorrichtung eine Zuführeinrichtung auf, welche der ersten Transporteinrichtung die Kunststoffvorformlinge, insbesondere als Produktstrom, zuführt. Besonders bevorzugt werden hier die Kunststoffvorformlinge zunächst aneinander anliegend transportiert und berühren sich gegenseitig. Die Vereinzelungseinrichtung vereinzelt diesen Produktstrom wie oben erwähnt. Besonders bevorzugt weist die Vorrichtung eine Sortiereinrichtung auf, die beispielsweise ausgehend von einer Preformschütte bzw. einer losen Schüttung die Kunststoffvorformlinge sortiert und insbesondere ausrichtet.

Bei einer weiteren vorteilhaften Ausführungsform weist die Vorrichtung Zuführschienen auf, welche die Kunststoffvorformlinge der ersten Transporteinrichtung zuführen. Besonders bevorzugt sind diese Zuführschienen starr ausgeführt und in einer exakten Position gegenüber der ersten Transporteinrichtung.

Bei einer weiteren vorteilhaften Ausführungsform weist die Erwärmungseinrichtung wenigstens eine und bevorzugt eine Vielzahl von Erwärmungseinrichtungen auf, welche entlang des Transportpfads der Kunststoffvorformlinge angeordnet sind. Hierbei kann es sich beispielsweise um Heizelemente bzw. Heizkästen handeln, die insbesondere seitlich neben dem Transportpfad der Kunststoffvorformlinge angeordnet sind. Insbesondere handelt es sich bei den Erwärmungseinrichtungen um stationär angeordnete Erwärmungseinrichtungen. Besonders bevorzugt handelt es sich bei den Erwärmungseinrichtungen um Infraroterwärmungseinrichtungen. Es wäre jedoch auch möglich, dass es sich bei der Erwärmungseinrichtung um einen Mikrowellenofen handelt.

Bei einer weiteren vorteilhaften Ausführungsform weist die Vorrichtung auch eine Kühleinrichtung auf, welche dazu geeignet und bestimmt ist, die Kunststoffvorformlinge zu kühlen.

Besonders bevorzugt weist die Erwärmungseinrichtung einen Kanal auf, durch den die Kunststoffvorformlinge transportiert werden.

Erfindungsgemäß weist die Transportvorrichtung eine dritte Transporteinrichtung auf, welche dazu geeignet und bestimmt ist, die Kunststoffvorformlinge von der Erwärmungseinrichtung zu der Umformungseinrichtung zu transportieren. Bei dieser dritten Transporteinrichtung kann es sich beispielsweise um einen Transportstern handeln. Es wäre sogar möglich, dass mehrere Transporteinrichtungen vorgesehen sind, welche die Kunststoffvorformlinge von der Erwärmungseinrichtung zu der Umformungseinrichtung fördern. Bei einer weiteren bevorzugten Ausführungsform können zwischen der Erwärmungseinrichtung und der Umformungseinrichtung auch Sterilisationselemente bzw. Sterilisationsaggregate vorgesehen sein, welche die Kunststoffvorformlinge sterilisieren.

Erfindungsgemäß weist die dritte Transporteinrichtung eine Antriebseinrichtung auf, und diese Antriebseinrichtung ist insbesondere unabhängig von der Antriebseinrichtung der zweiten Transporteinrichtung und/oder der Antriebseinrichtung der ersten Transporteinrichtung steuerbar.

Bei einer weiteren bevorzugten Ausführungsform sind sämtliche Transporteinrichtungen unabhängig voneinander steuerbar. Auf diese Weise wird ein besonders hohes Maß an Flexibilität erreicht.

Die vorliegende Erfindung ist weiterhin auf ein Verfahren zum Umformen von Kunststoffvorformlingen zu Kunststoffbehältnissen gerichtet, wobei die Kunststoffvorformlinge mit einer Transporteinrichtung entlang eines vorgegebenen Transportpfads transportiert werden und wobei diese Transportvorrichtung eine Vielzahl von Transporteinrichtungen (welche sich bevorzugt aneinander anschließen) zum Transportieren der Kunststoffvorformlinge aufweist.

Weiterhin ist eine Erwärmungseinrichtung vorgesehen, welche die Kunststoffvorformlinge erwärmt, und eine Umformungseinrichtung, welche entlang des Transportpfads der Kunststoffvorformlinge nach der Erwärmungseinrichtung angeordnet ist und welche die Kunststoffvorformlinge durch Beaufschlagung mit einem fließfähigen Medium zu den Kunststoffbehältnissen umformt. Weiterhin weist die Vorrichtung eine erste Transporteinrichtung auf, welche der Erwärmungseinrichtung die Kunststoffvorformlinge vereinzelt zuführt, wobei die Erwärmungseinrichtung eine zweite Transporteinrichtung aufweist, welche die Kunststoffvorformlinge während deren Erwärmung transportiert.

Erfindungsgemäß weist die erste Transporteinrichtung eine erste Antriebseinrichtung auf und die zweite Transporteinrichtung eine zweite Antriebseinrichtung und die erste Antriebseinrichtung und die zweite Antriebseinrichtung werden wenigstens zeitweise unabhängig voneinander gesteuert.

Weitere Vorteile und Ausführungsformen ergeben sich aus der beigefügten Zeichnung.

Darin zeigt:

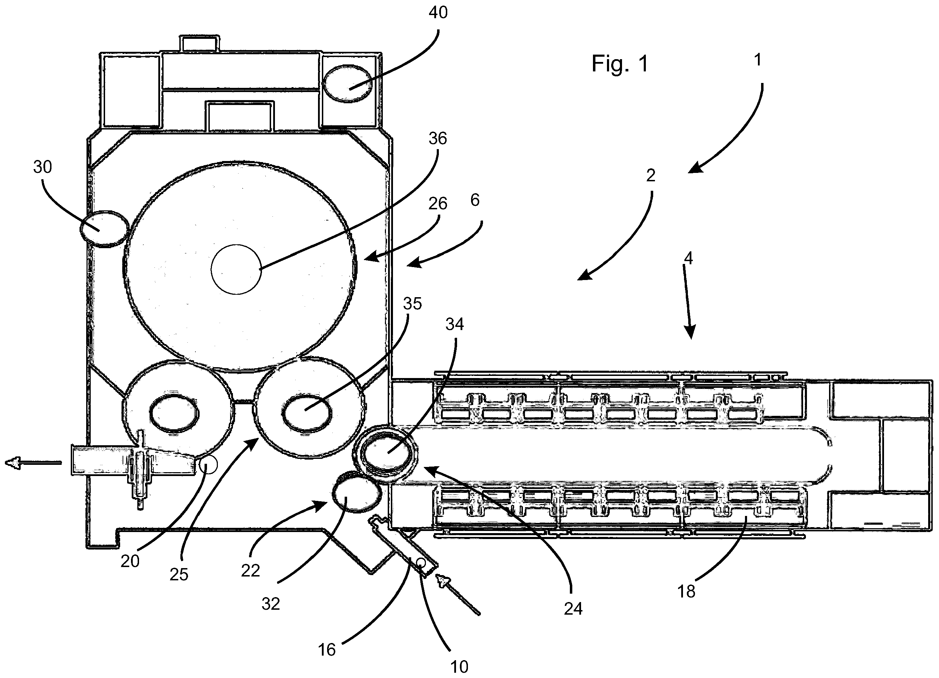

- Fig. 1: Eine schematische Darstellung einer erfindungsgemäßen Vorrichtung zum Umformen von Kunststoffvorformlingen zu Kunststoffbehältnissen.

Figur 1 zeigt eine Vorrichtung 1 zum Umformen von Kunststoffvorformlingen 10 zu Kunststoffbehältnissen 20. Diese Vorrichtung weist grob eine Heizeinrichtung bzw. Erwärmungseinrichtung 4 auf, welche zum Erwärmen der Kunststoffvorformlinge dient. An diese Erwärmungseinrichtung schließt sich die eigentliche Umformungseinrichtung 6 an. Diese Umformungseinrichtung weist einen drehbaren Träger 36 auf, an dem eine Vielzahl von Umformungsstationen 30 (nur eine dargestellt) angeordnet ist.

Die Kunststoffvorformlinge 10 werden über Zuführschienen 16 zunächst einer ersten Transporteinrichtung 22 zugeführt. Diese Transporteinrichtung 22 weist einen eigenen Antrieb 32 auf. Diese erste Transporteinrichtung 22 ist hier als Transportstern bzw. Sägezahnstern ausgeführt, der auch zum Vereinzeln der Kunststoffvorformlinge dient.

Ausgehend von dieser ersten Transporteinrichtung 22 werden die Kunststoffvorformlinge 10 einer zweiten Transporteinrichtung 24, welche die Kunststoffvorformlinge durch die Erwärmungseinrichtung 4 führt, transportiert. Diese zweite Transporteinrichtung 24 weist wiederum eine eigene Antriebseinrichtung 34 auf, welche insbesondere auch unabhängig steuerbar ist von der Antriebseinrichtung 32.

Das Bezugszeichen 18 kennzeichnet eine Heizeinrichtung, welche hier seitlich neben dem Transportpfad der Kunststoffvorformlinge angeordnet ist.

An die Erwärmungseinrichtung 4 schließt sich eine dritte Transporteinrichtung 25 mit einer Antriebseinrichtung 35 an. Hierbei kann es sich beispielsweise um einen Transportstern oder ein Transportrad handeln, welches die Kunststoffvorformlinge zu der Umformungseinrichtung 6 transportiert.

Das Bezugszeichen 26 kennzeichnet damit die vierte Transporteinrichtung, welche die Umformungsstationen 30 und damit auch die in diesen Umformungsstationen angeordneten Kunststoffvorformlinge transportiert. Das Bezugszeichen 36 kennzeichnet grob einen Antrieb für diese Transporteinrichtung 26.

Bevorzugt sind daher alle Transporteinrichtungen jeweils über Servomotoren angetrieben. Das Bezugszeichen 40 kennzeichnet eine Steuerungseinrichtung zum Steuern der gesamten Anlage. Dabei ist jedoch bevorzugt auch eine individuelle Steuerung der einzelnen Antriebe der Transporteinrichtungen vorgesehen.

### Bezugszeichenliste

- 1: Vorrichtung
- 4: Heizeinrichtung bzw. Erwärmungseinrichtung
- 6: Umformungseinrichtung
- 10: Kunststoffvorformlinge
- 16: Zuführschienen
- 18: Heizeinrichtung
- 20: Kunststoffbehältnisse
- 22: Transporteinrichtung
- 24: zweite Transporteinrichtung
- 25: dritte Transporteinrichtung
- 26: vierte Transporteinrichtung
- 30: Umformungsstationen
- 32: Antrieb
- 34: Antriebseinrichtung der zweiten Transporteinrichtung
- 35: Antriebseinrichtung der dritten Transporteinrichtung
- 36: drehbarer Träger
- 36: Antrieb der vierten Transporteinrichtung
- 40: Steuerungseinrichtung

## Patentansprüche

1. Vorrichtung (1) zum Umformen von Kunststoffvorformlingen (10) zu Kunststoffbehältnissen (20) mit einer Transportvorrichtung (2), welche die Kunststoffvorformlinge (10) entlang eines vorgegebenen Transportpfads transportiert, wobei diese Transportvorrichtung (2) eine Vielzahl von sich bevorzugt einander anschließenden Transporteinrichtungen (22, 24, 25, 26) zum Transportieren der Kunststoffvorformlinge aufweist, mit einer Erwärmungseinrichtung (4), welche die Kunststoffvorformlinge (10) erwärmt und mit einer Umformungseinrichtung (6), welche entlang des Transportpfads der Kunststoffvorformlinge (10) nach der Erwärmungseinrichtung (4) angeordnet ist, wobei die Vorrichtung (1) eine erste Transporteinrichtung (22) aufweist, welche der Erwärmungseinrichtung die Kunststoffvorformlinge vereinzelt zuführt, wobei die Erwärmungseinrichtung (4) eine zweite Transporteinrichtung (24) aufweist, welche die Kunststoffvorformlinge während deren Erwärmung transportiert,
wobei
die erste Transporteinrichtung (22) eine erste Antriebseinrichtung (32) aufweist und die zweite Transporteinrichtung (24) eine zweite Antriebseinrichtung (34) aufweist und die erste Antriebseinrichtung (32) und die zweite Antriebseinrichtung (34) unabhängig voneinander steuerbar sind, wobei
die Transportvorrichtung (2) mindestens eine dritte Transporteinrichtung (25) aufweist, welche dazu geeignet und bestimmt ist, die Kunststoffvorformlinge (10) von der Erwärmungseinrichtung (4) zu der Umformungseinrichtung (6) zu transportieren, und weiter wobei
die dritte Transporteinrichtung (25) eine Antriebseinrichtung (35) aufweist und diese Antriebseinrichtung (35) unabhängig von der Antriebseinrichtung (32) der ersten Transporteinrichtung (22) und/oder der Antriebseinrichtung (34) der zweiten Transporteinrichtung (24) steuerbar ist, und
diese Transporteinrichtungen (22, 24, 25) der Umformungseinrichtung (6) vorgeschaltet sind, und weiter sodass
die Antriebseinrichtungen (32, 34, 35) der mindestens drei Transporteinrichtungen (22, 24, 25) damit unabhängig voneinander steuerbar sind,
**dadurch gekennzeichnet, dass**
eine Leistung der Transporteinrichtungen (22, 24, 25) stromaufwärts der Umformungseinrichtung (6) anpassbar ist.

2. Vorrichtung (1) nach Anspruch 1,
**gekennzeichnet durch**
eine vierte Transporteinrichtung (26), welche der Umformungseinrichtung (6) zugeordnet ist und ein sogenanntes Blasrad ist.

3. Vorrichtung (1) nach Anspruch 1 oder 2,
**dadurch gekennzeichnet, dass**
eine Servoantriebstechnologie in der Umformungseinrichtung (6) vorgesehen ist, und damit erreicht ist, dass, insbesondere bei geraden Teilungen, mit Hilfe eines ausgewählten Bedienbildschirmprogramms, welches besonders bevorzugt in einem Bedienbildschirm einer Blasmaschine anwählbar ist, die Leistung aller einer vierten Transporteinrichtung (26) vorgeschalteten Funktionsräder so anpassbar ist, dass lückenlos Kunststoffvorformlinge (10) der Umformungseinrichtung (6) zuführbar sind.

4. Vorrichtung (1) nach wenigstens einem der vorangegangenen Ansprüche,
**dadurch gekennzeichnet, dass**
sämtliche Einstellungen der Funktionsräder zueinander in einem Bedienbildschirmprogramm als Maschinenrezepte bzw. Produktionsrezepte abspeicherbar sind.

5. Vorrichtung (1) nach Anspruch 3,
**dadurch gekennzeichnet, dass**
wenigstens eine Umformungsstation (6) und besonders bevorzugt eine Vielzahl von Umformungsstationen (6) an der vierten Transporteinrichtung (26) angeordnet sind.

6. Vorrichtung (1) nach dem vorhergehenden Anspruch,
**dadurch gekennzeichnet, dass**
diese Umformungsstationen (6) jeweils Blasformeinrichtungen aufweisen, wobei diese Blasformeinrichtungen besonders bevorzugt Seitenteile aufweisen, die bezüglich einander schwenkbar sind, um Kunststoffvorformlinge (10) aufzunehmen und in ihrem Inneren zu den Kunststoffbehältnissen und insbesondere Kunststoffflaschen zu expandieren und daneben die Blasformeinrichtungen bevorzugt auch Bodenteile aufweisen, welche den Hohlraum zur Aufnahme der Kunststoffvorformlinge (10) begrenzen.

7. Vorrichtung (1) nach wenigstens einem der vorangegangenen Ansprüche 5 bis 6,
**dadurch gekennzeichnet, dass**
auf diese Weise die Leistung insoweit reduzierbar ist, als dass nur noch zum Beispiel jede zweite Umformungsstation oder nur eine einzige Umformungsstation mit Kunststoffvorformlingen (10) beschickbar ist.

8. Vorrichtung (1) nach wenigstens einem der vorangegangenen Ansprüche,
**dadurch gekennzeichnet, dass**
die erste Transporteinrichtung als Vereinzelungseinrichtung (22) ausgebildet ist, welche aufeinanderfolgende Kunststoffvorformlinge (10) vereinzelt.

9. Vorrichtung (1) nach wenigstens einem der vorangegangenen Ansprüche,
**dadurch gekennzeichnet, dass**
die erste Transporteinrichtung (22) gegenüber der zweiten Transporteinrichtung (24) mit einer veränderten und insbesondere verlangsamten Transportgeschwindigkeit antreibbar ist.

10. Vorrichtung (1) nach Anspruch 9,
**dadurch gekennzeichnet, dass**
die erste Transporteinrichtung bei fortgesetztem Betrieb der zweiten Transporteinrichtung (24) anhaltbar ist.

11. Vorrichtung (1) nach wenigstens einem der vorangegangenen Ansprüche,
**dadurch gekennzeichnet, dass**
die Vorrichtung (1) eine Zuführeinrichtung aufweist, welche der ersten Transporteinrichtung (22) die Kunststoffvorformlinge, insbesondere als Produktstrom, zuführt.

12. Vorrichtung (1) nach wenigstens einem der vorangegangenen Ansprüche,
**dadurch gekennzeichnet, dass**
die Erwärmungseinrichtung (4) wenigstens eine und bevorzugt eine Vielzahl von Erwärmungseinrichtungen aufweist, welche entlang des Transportpfads der Kunststoffvorformlinge angeordnet sind.

13. Verfahren zum Umformen von Kunststoffvorformlingen (10) zu Kunststoffbehältnissen (20), wobei die Kunststoffvorformlinge mit einer Transportvorrichtung (2) entlang eines vorgegebenen Transportpfads transportiert werden, wobei diese Transportvorrichtung (2) eine Vielzahl von sich bevorzugt einander anschließenden Transporteinrichtungen (22, 24, 25, 26) zum Transportieren der Kunststoffvorformlinge (10) aufweist, wobei eine Erwärmungseinrichtung (4) die Kunststoffvorformlinge (10) erwärmt und eine Umformungseinrichtung (6), welche entlang des Transportpfads der Kunststoffvorformlinge (10) nach der Erwärmungseinrichtung (4) angeordnet ist, die Kunststoffvorformlinge (10) durch Beaufschlagung mit einem fließfähigen Medium zu den Kunststoffbehältnissen (20) umformt, wobei die Vorrichtung (1) eine erste Transporteinrichtung (22) aufweist, welche der Erwärmungseinrichtung (4) die Kunststoffvorformlinge (10) vereinzelt zuführt, wobei die Erwärmungseinrichtung (4) eine zweite Transporteinrichtung (24) aufweist, welche die Kunststoffvorformlinge (10) während deren Erwärmung transportiert,
wobei
die erste Transporteinrichtung (22) eine erste Antriebseinrichtung (32) aufweist und die zweite Transporteinrichtung (24) eine zweite Antriebseinrichtung (34) aufweist und die erste Antriebseinrichtung (32) und die zweite Antriebseinrichtung (34) wenigstens zeitweise unabhängig voneinander gesteuert werden,
die Transportvorrichtung (2) mindestens eine dritte Transporteinrichtung (25) aufweist, welche die Kunststoffvorformlinge (10) von der Erwärmungseinrichtung (4) zu der Umformungseinrichtung (6) transportiert, und weiter wobei die dritte Transporteinrichtung (25) eine Antriebseinrichtung (35) aufweist und diese Antriebseinrichtung (35) unabhängig von der Antriebseinrichtung (32) der ersten Transporteinrichtung (22) und/oder der Antriebseinrichtung (34) der zweiten Transporteinrichtung (24) angesteuert wird, sodass
diese Transporteinrichtungen (22, 24, 25) der Umformungseinrichtung (6) vorgeschaltet sind, und weiter sodass
die Antriebseinrichtungen (32, 34, 35) der mindestens drei Transporteinrichtungen (22, 24, 25) damit unabhängig voneinander gesteuert werden,
**dadurch gekennzeichnet, dass**
eine Leistung der Transporteinrichtungen (22, 24, 25) stromaufwärts der Umformungseinrichtung (6) angepasst wird.

## Claims

1. Apparatus (1) for forming plastic material preforms (10) into plastic material containers (20) with a transport device (2), which transports the plastic material preforms (10) along a predetermined transport path, wherein this transport device (2) comprises a plurality of transport devices (22, 23, 24, 25, 26) preferably adjoining one another for transporting the plastic material preforms, with a heating device (4) which heats the plastic material preforms (10) and with a forming device (6) which is arranged along the transport path of the plastic material preforms (10) after the heating device (4), wherein the apparatus (1) comprises a first transport device (22) which feeds the plastic material preforms individually to the heating device, wherein the heating device (4) comprises a second transport device (24) which transports the plastic material preforms during their heating,
wherein
the first transport device (22) comprises a first drive device (32) and the second transport device (24) comprises a second drive device (34) and the first drive device (32) and the second drive device (34) are controllable independently of each other, wherein
the transport device (2) hast at least one third transport device (25), which is suitable and intended for transporting the plastic preforms (10) from the heating device (4) to the forming device (6), and further wherein
the third transport device (25) comprises a drive device (35) and this drive device (35) is controllable independently form the drive device (32) of the first transport device (22) and/or the drive device (34) of the second transport device (24), and
these transport devices (22, 24, 25) are upstream of the forming device (6), and further so that
the drive devices (32, 34, 35) of the at least three transport devices (22, 24, 25) are therefore driven independently form each other, **characterised in that**
the power of the transport devices (22, 24, 25) upstream of the forming device (6) is adjustable.

2. Apparatus (1) according to claim 1,
**characterised in that**
a fourth transport device (26), which is assigned to the forming device (6), is a so-called blowing wheel.

3. Apparatus (1) according to claim 1 or 2,
**characterised in that**
a servo drive technology in the forming device is provided, which achieves that in particular for straight pitches the output of all function wheels upstream of a fourth transport device (26) can be adjusted with the aid of a selected operating screen program which is particularly preferred to be selected in an operating screen of a blowing machine, that plastic preforms (10) are fed to the forming device (6) without gaps.

4. Apparatus (1) according to at least one of the preceding claims,
**characterised in that**
all settings of the function wheels in relation to each other can be stored in the operating screen program as machine recipes or production recipes.

5. Apparatus (1) according to at least one of the preceding claims,
**characterised in that**
at least one forming station (6) and particularly preferably a plurality of forming stations (6) are arranged on the fourth transport device (26).

6. Apparatus (1) according to the preceding claim,
**characterised in that**
these forming stations (6) in each case comprise blow-moulding devices, wherein these blow-moulding devices having side parts which can be pivoted relative to one another in order to receive plastic material preforms (10) and expand them in their interior towards the plastic material containers and in particular plastic material bottles and further the blow moulding devices preferably also have bottom parts which limit the cavity for receiving the plastic material preforms (10).

7. Apparatus (1) according to at least one the preceding claims 5 to 6,
**characterised in that**,
in this way, the output is reduced to the extent that only for example every second forming station or only one single forming station is fed with plastic material preforms (10).

8. Apparatus (1) according to claim 1,
**characterised in that**
the first transport device is designed as a separating device (22) which separates successive plastic preforms (10).

9. Apparatus (1) according to claim 1
**characterised in that**
the first transport device (22) can be driven at a different and in particular slower transport speed with respect to the second transport device (24).

10. Apparatus (1) according to claim 1,
**characterised in that**
the first transport device is stoppable while the second transport device (24) continues to run.

11. Apparatus (1) according to at least one of the preceding claims,
**characterised in that**
the apparatus (1) has a feed device which feeds the plastic material preforms, in particular as a product stream, to the first transport device (22).

12. Apparatus (1) according to at least one of the preceding claims,
**characterised in that**
the heating device (4) comprises at least one and preferably a plurality of heating devices which are arranged along the transport path of the plastic material preforms.

13. Method for forming plastic material preforms (10) into plastic material containers (20), wherein the plastic material preforms are transported with a transport device (2) along a predetermined transport path, wherein this transport device (2) comprises a plurality of transport devices (22, 24, 25, 26) which preferably adjoin one another for transporting the plastic material preforms, wherein a heating device (4) heats the plastic material preforms (10) and a forming device (6) which is arranged along the transport path of the plastic material preforms (10) after the heating device (4) forms the plastic material preforms (10) into the plastic material containers (20) by acting upon a flowable medium, wherein the apparatus (1) has a first transport device (22) which feeds the plastic material preforms (10) individually to the heating device (4), wherein the heating device (4) has a second transport device (24) which transports the plastic material preforms during their heating,
wherein
the first transport device (22) has a first drive device (32) and the second transport device (24) has a second drive device (34), and the first drive device (32) and the second drive device (34) are controlled independently of each other at least at times,
the transport device (2) hast at least one third transport device (25), which transports the plastic preforms (10) from the heating device (4) to the forming device (6), and further wherein
the third transport device (25) comprises a drive device (35) and this drive device (35) is controllable independently form the drive device (32) of the first transport device (22) and/or the drive device (34) of the second transport device (24), and
these transport devices (22, 24, 25) are upstream of the forming device (6), and further so that
the drive devices (32, 34, 35) of the at least three transport devices (22, 24, 25) are therefore driven independently form each other,
**characterised in that**
the power of the transport devices (22, 24, 25) upstream of the forming device (6) is adjustable.

## Revendications

1. Dispositif (1) de formage de préformes en matière plastique (10) en récipients en matière plastique (20) avec un dispositif de transport (2) qui transporte les préformes en matière plastique (10) le long d'une voie de transport prédéfinie, dans lequel ce dispositif de transport (2) présente une pluralité de systèmes de transport (22, 24, 25, 26) contigus les uns aux autres de préférence pour le transport des préformes en matière plastique, avec un système de chauffage (4) qui chauffe les préformes en matière plastique (10) et avec un système de formage (6) qui est agencé le long de la voie de transport des préformes en matière plastique (10) après le système de chauffage (4), dans lequel le dispositif (1) présente un premier système de transport (22) qui fournit de manière séparée au système de chauffage les préformes en matière plastique, dans lequel le système de chauffage (4) présente un deuxième système de transport (24) qui transporte les préformes en matière plastique pendant leur chauffage,
dans lequel
le premier système de transport (22) présente un premier système d'entraînement (32) et le deuxième système de transport (24) présente un second système d'entraînement (34) et le premier système d'entraînement (32) et le second système d'entraînement (34) peuvent être commandés indépendamment l'un de l'autre, dans lequel
le dispositif de transport (2) présente au moins un troisième système de transport (25) qui est approprié et destiné à transporter les préformes en matière plastique (10) du système de chauffage (4) au système de formage (6), et encore dans lequel
le troisième système de transport (25) présente un système d'entraînement (35) et ce système d'entraînement (35) peut être commandé indépendamment du système d'entraînement (32) du premier système de transport (22) et/ou du système d'entraînement (34) du deuxième système de transport (24), et
ces systèmes de transport (22, 24, 25) sont montés en amont du système de formage (6), et encore de sorte que
les systèmes d'entraînement (32, 34, 35) des au moins trois systèmes de transport (22, 24, 25) puissent être commandés ainsi indépendamment les uns des autres,
**caractérisé en ce que**
une puissance des systèmes de transport (22, 24, 25) peut être adaptée en amont du système de formage (6).

2. Dispositif (1) selon la revendication 1,
**caractérisé par**
un quatrième système de transport (26) qui est associé au système de formage (6) et est une dite roue de soufflage.

3. Dispositif (1) selon la revendication 1 ou 2,
**caractérisé en ce que**
une technologie de servoentraînement est prévue dans le système de formage (6), et laquelle permet ainsi qu'en particulier en cas de séparations droites, à l'aide d'un programme d'écran de commande sélectionné qui peut être choisi particulièrement de préférence dans un écran de commande d'une machine de soufflage, la puissance de toutes les roues fonctionnelles montées en amont d'un quatrième système de transport (26) puisse être adaptée de sorte que des préformes en matière plastique (10) puissent être fournies sans interruption au système de formage (6).

4. Dispositif (1) selon au moins l'une quelconque des revendications précédentes,
**caractérisé en ce que**
tous les réglages des roues fonctionnelles les unes par rapport aux autres peuvent être enregistrés dans un programme d'écran de commande comme formules de machine ou formules de production.

5. Dispositif (1) selon la revendication 3,
**caractérisé en ce que**
au moins une station de formage (6) et particulièrement de préférence une pluralité de stations de formage (6) est agencée au niveau du quatrième système de transport (26).

6. Dispositif (1) selon la revendication précédente,
**caractérisé en ce que**
ces stations de formage (6) présentent respectivement des systèmes de formage par soufflage, dans lequel ces systèmes de formage par soufflage présentent particulièrement de préférence des parties latérales qui sont pivotantes les unes par rapport aux autres afin de recevoir des préformes en matière plastique (10) et de se dilater dans leur intérieur en récipients en matière plastique et en particulier en bouteilles en matière plastique et de plus les systèmes de formage par soufflage présentent de préférence aussi des parties de fond qui délimitent l'espace creux pour la réception des préformes en matière plastique (10).

7. Dispositif (1) selon au moins l'une quelconque des revendications précédentes 5 à 6,
**caractérisé en ce que**
de cette manière, la puissance peut être réduite dans la mesure où juste par exemple chaque seconde station ou seulement une station de formage unique peut être alimentée en préformes en matière plastique (10).

8. Dispositif (1) selon au moins l'une quelconque des revendications précédentes,
**caractérisé en ce que**
le premier dispositif de transport est réalisé comme système de séparation (22) qui sépare des préformes en matière plastique (10) consécutives.

9. Dispositif (1) selon au moins l'une quelconque des revendications précédentes,
**caractérisé en ce que**
le premier système de transport (22) peut être entraîné par rapport au deuxième système de transport (24) avec une vitesse de transport modifiée et en particulier ralentie.

10. Dispositif (1) selon la revendication 9,
**caractérisé en ce que**
le premier système de transport peut être arrêté en cas de fonctionnement continu du deuxième système de transport (24).

11. Dispositif (1) selon au moins l'une quelconque des revendications précédentes,
**caractérisé en ce que**
le dispositif (1) présente un système d'amenée qui amène au premier système de transport (22) les préformes en matière plastique, en particulier comme courant de produit.

12. Dispositif (1) selon au moins l'une quelconque des revendications précédentes,
**caractérisé en ce que**
le système de chauffage (4) présente au moins un et de préférence une pluralité de systèmes de chauffage qui sont agencés le long de la voie de transport des préformes en matière plastique.

13. Procédé de formage de préformes en matière plastique (10) en récipients en matière plastique (20), dans lequel les préformes en matière plastique sont transportées avec un dispositif de transport (2) le long d'une voie de transport prédéfinie, dans lequel ce dispositif de transport (2) présente une pluralité de systèmes de transport (22, 24, 25, 26) contigus de préférence les uns aux autres pour le transport des préformes en matière plastique (10), dans lequel un système de chauffage (4) chauffe les préformes en matière plastique (10) et un système de formage (6) qui est agencé le long de la voie de transport des préformes en matière plastique (10) après le système de chauffage (4), forme les préformes en matière plastique (10) par alimentation en un fluide coulant en récipients en matière plastique (20), dans lequel le dispositif (1) présente un premier système de transport (22) qui amène au système de chauffage (4) les préformes en matière plastique (10) de manière séparée, dans lequel le système de chauffage (4) présente un deuxième système de transport (24) qui transporte les préformes en matière plastique (10) pendant leur chauffage,
dans lequel
le premier système de transport (22) présente un premier système d'entraînement (32) et le deuxième système de transport (24) présente un second système d'entraînement (34) et le premier système d'entraînement (32) et le second système d'entraînement (34) peuvent être commandés au moins temporairement indépendamment l'un de l'autre,
le dispositif de transport (2) présente au moins un troisième système de transport (25) qui transporte les préformes en matière plastique (10) du système de chauffage (4) au système de formage (6), et encore dans lequel
le troisième système de transport (25) présente un système d'entraînement (35) et ce système d'entraînement (35) est commandé indépendamment du dispositif d'entraînement (32) du premier système de transport (22) et/ou du système d'entraînement (34) du deuxième système de transport (24) de sorte que
ces systèmes de transport (22, 24, 25) soient montés en amont du système de formage (6), et encore en ce que
les systèmes d'entraînement (32, 34, 35) des au moins trois systèmes de transport (22, 24, 25) sont commandés ainsi indépendamment les uns des autres,
**caractérisé en ce que**
une puissance des systèmes de transport (22, 24, 25) est adaptée en amont du système de formage (6).
